(19) **Europäisches Patentamt**
**European Patent Office**
**Office européen des brevets**

(11) **EP 1 652 749 B1**

(12) **EUROPÄISCHE PATENTSCHRIFT**

| | |
|---|---|
| (45) Veröffentlichungstag und Bekanntmachung des Hinweises auf die Patenterteilung:<br>**14.11.2007 Patentblatt 2007/46** | (51) Int Cl.:<br>**B62D 5/06** *(2006.01)* |

(21) Anmeldenummer: **05021619.1**

(22) Anmeldetag: **04.10.2005**

(54) **Ermittlung des Fahrerhandmoments bei einer hydraulischen Servolenkung**

Determining of a driver hand torque in a hydraulic power steering device

Détermination d'un couple manuel dans une direction assistée hydraulique

(84) Benannte Vertragsstaaten:
**CZ DE ES FR IT**

(30) Priorität: **29.10.2004 DE 102004052956**

(43) Veröffentlichungstag der Anmeldung:
**03.05.2006 Patentblatt 2006/18**

(73) Patentinhaber: **ThyssenKrupp Presta SteerTec GmbH**
**40476 Düsseldorf (DE)**

(72) Erfinder:
• **Von Hammel, Klaus**
**21614 Buxtehude (DE)**

• **Speidel, Gerd**
**73650 Winterbach (DE)**
• **Hirschmann, Richard**
**8042 Graz (AT)**

(74) Vertreter: **Gerber, Wolfram**
**Patentanwälte Lenzing Gerber,**
**Bahnstrasse 9**
**40212 Düsseldorf (DE)**

(56) Entgegenhaltungen:
**DE-A1- 19 859 806      DE-B3- 10 254 688**
**DE-C1- 19 616 439      DE-C1- 19 801 393**

**Beschreibung**

Die vorliegende Erfindung betrifft eine hydraulische Servolenkung für Kraftfahrzeuge mit den Merkmalen des Oberbegriffs des Anspruchs 1.

Hydraulische Servolenkungen mit einer Rückwirkungsanordnung sind aus dem Stand der Technik bekannt, beispielsweise aus der DE 196 16 439 C1. Bei dieser Lenkung liegen Rückwirkungskörper in Form von Kugeln in V-förmigen Nuten ein, die in Radialrichtung des Drehschiebers nach außen offen sind. Die Rückwirkungskörper liegen in der kräftefreien Mittelstellung des Drehschieberventils an beiden Nutenflanken an. Bei einer Auslenkung des Drehschieberventils gegen die Federkraft des Drehstabs werden die Kugeln nur an einer Flanke der V-förmigen Nuten anliegen. Die Kugeln werden von außen mit Hydraulikdruck beaufschlagt und in die Nuten gedrängt, so dass sie zusammen mit der geneigten Nutenflanke, an der sie anliegen, als Rückstellmoment (Kugelmoment) in Richtung auf die kräftefreie Mittelstellung des Ventils wirken. Die Lenkung des Kraftfahrzeugs erzeugt dadurch ein höheres Handmoment am Lenkrad und fühlt sich dadurch direkter bzw. sportlicher an.

Diese Lenkung ist nur dazu vorgesehen und eingerichtet, Rückstellmomente in Richtung auf die Mittelstellung des Drehschieberventils zu erzeugen.

Aus der DE 10254 688 B3 die den Oberbegriff der Ansprüche 1 und 2 bildet, ist eine hydraulische Servolenkung für Kraftfahrzeuge bekannt, welche ein Servoventil umfasst, dass mit einem Lenkhandrad verbunden ist. Das Servoventil ist in Form einer Drehschieberanordnung ausgebildet. Seine zueinander drehbeweglichen Steuerteile sind miteinander über eine vorzugsweise als Drehstab ausgebildete Federung, die die Steuerteile in eine Normallage relativ zueinander zu stellen sucht, antriebsgekoppelt. Die Lenkung weist ferner eine Rückwirkungseinrichtung auf, die Einfluss auf die Relativdrehung zwischen den Steuerteilen hat. Über eine Vorrichtung kann unabhängig von der Lenkhandhabe auf die Rückwirkungseinrichtung einwirken, so dass eine relative Verdrehung der Steuerteile gegeneinander einstellbar ist.

Andere aus der Praxis bekannte Lenkungen weisen außer einem elektrischen oder hydraulischen Servoantrieb noch einen Hilfsantrieb auf, der über ein Überlagerungsgetriebe Lenkimpulse in die Lenksäule des Kraftfahrzeugs einleiten kann. Diese Lenkungen sind sehr komplex und beanspruchen einen großen Bauraum, da neben dem eigentlichen Servoantrieb noch ein zweiter Hilfsantrieb mit Getriebe erforderlich ist.

Es ist deshalb Aufgabe der vorliegenden Erfindung, eine hydraulische Servolenkung mit Rückwirkungsanordnung dahingehend zu modifizieren, dass eine Aufprägung eines zusätzlichen Drehmoments auf die Lenkung ohne einen zweiten Aktuator möglich wird, wobei das Fahrerhandmoment mittels geeigneter Sensoren ermittelbar ist.

Diese Aufgabe wird von einer Servolenkung mit den Merkmalen des Anspruchs 1 oder des Anspruchs 2 gelöst.

Die abhängigen Patentansprüche beschreiben vorteilhafte Ausgestaltungen der Erfindung.

Für eine aktive hydraulische Momentenüberlagerung ist zur Darstellung von Sonderfunktionen eine Messung des Fahrerhandmoments notwendig. Ein zusätzlicher Drehmomentensensor an der Lenksäule erzeugt jedoch zusätzliche Kosten. Ein derartiger Drehmomentensensor kann vorteilhaft eingespart werden, sofern in einer ersten Ausgestaltung der Erfindung drei Drucksensoren oder in einer zweiten Ausgestaltung der Erfindung zwei Drucksensoren und zwei Winkelsensoren eingesetzt werden. Hierbei nutzt die Erfindung die Erkenntnis, dass sich aus der Momentenbilanzen unter Berücksichtigung von Plausibilitäten das Fahrerhandmoment ermitteln läßt. Sofern die gesteuerten Ventile der Rückwirkungskörper nicht bestromt werden, kann das Fahrerhandmoment vorteilhaft aus dem ermittelten Unterstützungsdruck des Servomotors und der bekannten Druck-Verdrehwinkel-Kennlinie des Drehschieberventils ermittelt werden.

Nachfolgend werden mögliche Ausführungsbeispiele der vorliegenden Erfindung anhand der Zeichnungen beschrieben. Es zeigen:

Figur 1:   Ein Drehschieberventil einer erfindungsgemäßen Servolenkung in einem Querschnitt von der Seite;

Figur 2:   das Drehschieberventil gemäß Figur 1 in einem Querschnitt in Radialrichtung entlang der Linie II-II aus Figur 1;

Figur 3:   dem Bereich III der Figur 2 in einer vergrößerten ausschnittsweisen Darstellung;

Figur 4:   einen hydraulischen Schaltplan für eine erfindungsgemäße Servolenkung mit einem Servoventil mit offener Mitte;

Figur 5:   einen Schaltplan entsprechend Figur 4 in einer einfacheren Ausführung;

Figur 6:   einen Schaltplan für ein Servoventil mit geschlossener Mitte

Figur 7:   vereinfachte Systemdarstellung sowie Druck-Momenten-Kennlinie;

Figur 8:     einen Schaltplan mit den erfindungsgemäßen Sensoren zur Ermittlung des Fahrerhandmoments.

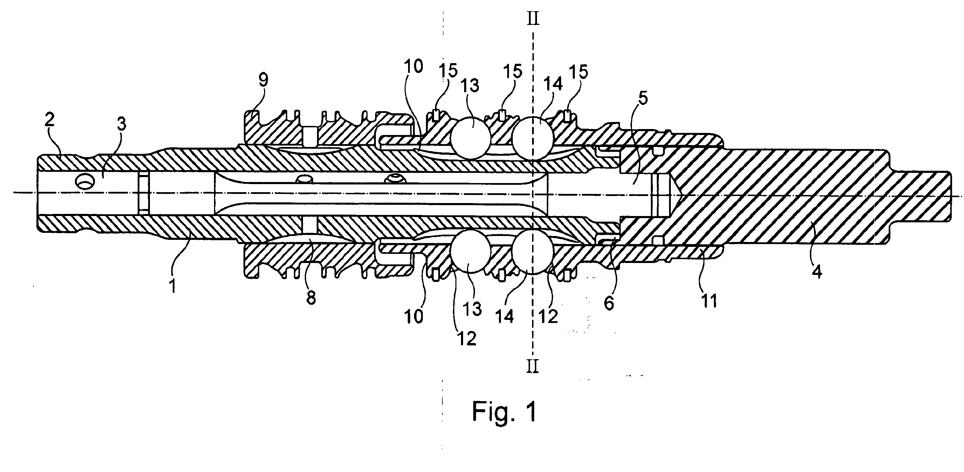

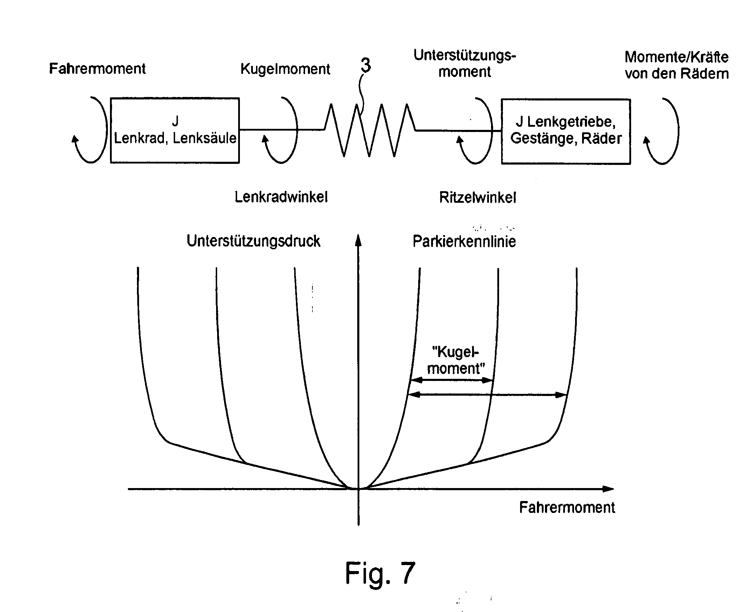

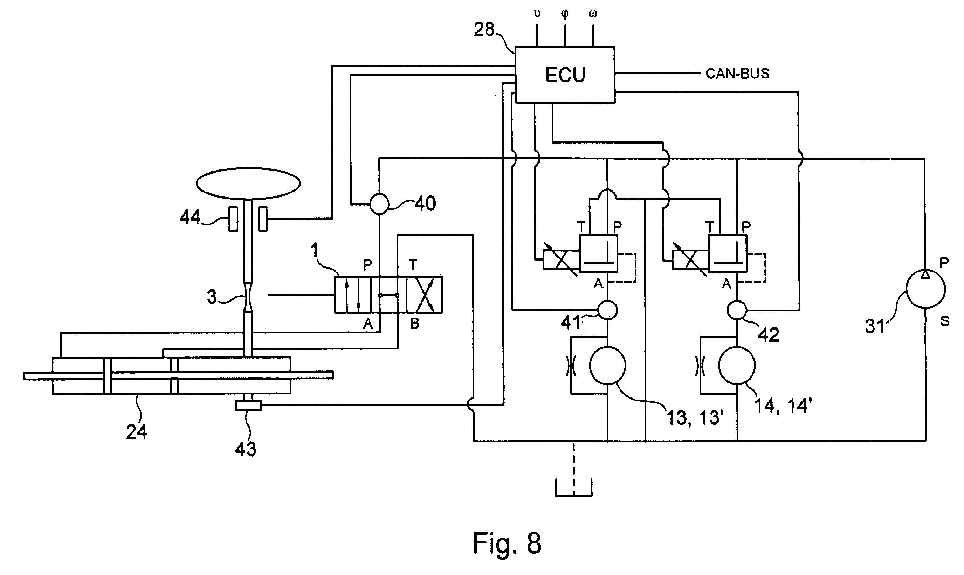

Zum Verständnis der erfindungsgemäßen Servolenkung wird diese zunächst anhand der Figuren 1 bis 6 näher erläutert. Anhand der Figuren 7 und 8 wird anschließend die erfindungsgemäße Ermittlung des Fahrerhandmoments ausschließlich mittels Drucksensoren sowie in Kombination mit Winkelsensoren erläutert.

In der Figur 1 ist ein Drehschieberventil 1 einer erfindungsgemäßen Servolenkung in einem Querschnitt von der Seite dargestellt. Das Drehschieberventil 1 weist einen Drehschieber 2 auf, der im Bereich einer Verzahnung (in Fig. 1 links) mit einer Lenksäule und einem Lenkrad eines Kraftfahrzeugs zu verbinden ist. Im Innern des Drehschiebers 2 befindet sich ein Drehstab 3, der im Bereich der Verzahnung mit dem Drehschieber 2 drehfest verstiftet ist. An seinem gegenüberliegenden Ende weist das Drehschieberventil 1 ein Ritzel 4 auf, das in Betrieb mit einer nicht dargestellten Zahnstange der Servolenkung kämmt. Der Drehstab 3 ist an seinem Ende 5 mit dem Ritzel 4 ebenfalls drehfest verstiftet oder verpreßt, so dass der Drehschieber 2 und das Ritzel 4 gegen die Torsionsfederkraft des Drehstabs 3 gegeneinander verdrehbar sind. Der Drehschieber 2 ist zu diesem Zweck drehbar gelagert. Ein mechanischer Anschlag 6 begrenzt den möglichen relativen Drehwinkel.

Die Beaufschlagung eines Servomotors mit Hydraulikdruck geschieht in an sich bekannter Weise über Steuernuten 8 und eine Steuerbüchse 9, die nicht weiter beschrieben werden müssen.

Der Drehschieber 2 trägt weiter eine Anzahl von Rückwirkungsnuten 10, die radial nach außen offen sind und die im Querschnitt etwa v-förmig ausgebildet sind. Eine mit dem Ritzel 4 verbundene Hülse 11 umgibt dabei den Drehschieber 2 im Bereich der Rückwirkungsnuten 10. Die Hülse 11 weist eine Anzahl von Bohrungen 12 auf, in die jeweils ein Rückwirkungskörper 13, 14 eingelegt ist. Die Rückwirkungskörper 13 und 14 sind bei diesem Ausführungsbeispiel Kugeln, die bei einer radial von außen einwirkenden Kraft in die Rückwirkungsnuten 10 gedrängt werden.

Die insoweit beschriebene Anordnung ist etwa rotationssymmetrisch ausgeführt. Insbesondere sind die Steuerbüchse 9 und die Hülse 11 drehbar in einem äußeren Ventilgehäuse, das hier nicht dargestellt ist, gelagert. Umlaufende Dichtungen 15 trennen dabei den in Figur 1 linken Satz von Rückwirkungskörpern 13 von dem in Figur 1 rechten Satz von Rückwirkungskörpern 14, in dem die äußeren gemeinsam mit dem nicht dargestellten Gehäuse definierten Räume voneinander getrennt werden.

Diese äußeren Räume können im Betrieb mit Hydraulikdruck beaufschlagt werden, welcher dann die Rückwirkungskörper 13 und 14 in die Rückwirkungsnuten 10 drängt.

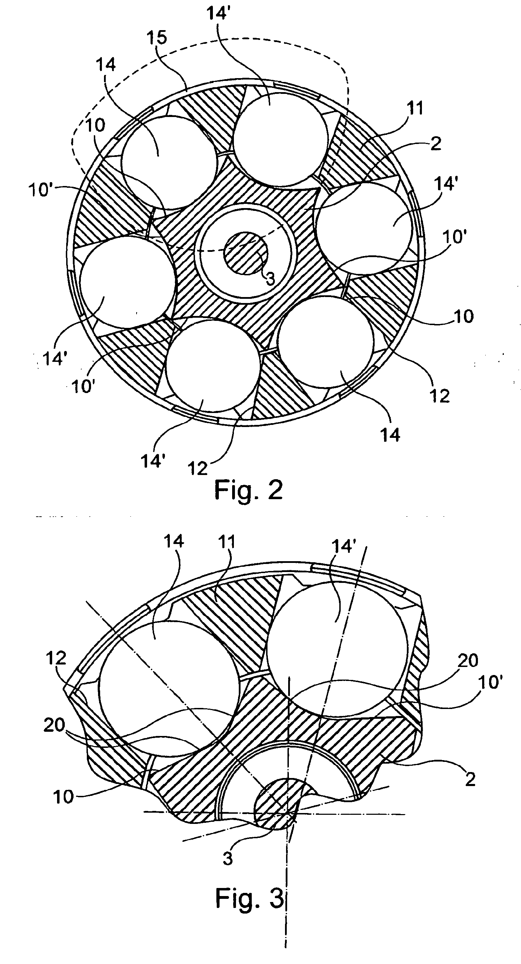

In der Figur 2 ist ein Querschnitt durch das Drehschieberventil der Figur 1 entlang der Linie II-II gezeichnet. Der Querschnitt zeigt den Drehstab 3 in einem Bereich geringer Dicke, der im Betrieb als Torsionsfeder wirkt. Der Drehstab 3 ist umgeben von dem mit Rückwirkungsnuten 10 versehenen Bereich des Drehschiebers 2. Insgesamt sind sechs Rückwirkungsnuten 10 vorgesehen, die sich in achsparalleler Richtung erstrecken. In jeder der Rückwirkungsnuten 10 liegt ein Rückwirkungskörper 14, 14' ein. Während die Rückwirkungskörper 14 und 14' mit konstantem Winkelabstand von 60 Grad über den Umfang des Drehschieberventils verteilt sind, sind die korrespondierenden Rückwirkungsnuten 10 einerseits und 10' andererseits gegeneinander versetzt.

Dies ist in der Figur 3 verdeutlicht, die einen vergrößerten Ausschnitt aus Figur 2 darstellt.

Die Figur 2 und die Figur 3 zeigen die Mittelstellung des Drehschieberventils 1, in der der Drehstab 3 kräftefrei ist. Der Rückwirkungskörper 14 liegt dabei symmetrisch in der Rückwirkungsnut 10 ein und berührt den Drehschieber 2 an zwei Punkten der Nutenflanken gleichzeitig, die in der Figur 3 mit 20 gekennzeichnet sind. Eine Beaufschlagung des Rückwirkungskörpers 14 in Radialrichtung mit Hydraulikdruck führt deshalb in dieser Stellung des Drehschieberventils 1 zu keinem Drehmoment, das auf den Drehschieber 2 ausgeübt wird.

Die Rückwirkungsnut 10', die in der Figur 3 rechts dargestellt ist, ist in der gezeigten Mittelstellung des Drehschieberventils nicht symmetrisch zu dem Rückwirkungskörper 14' ausgerichtet. Der Rückwirkungskörper 14' liegt an einem Berührungspunkt 20' an der Oberfläche der Rückwirkungsnut 10' an. Ein von außen einwirkender Hydraulikdruck, der den Rückwirkungskörper 14' in Richtung auf den Drehstab 3 radial nach innen drängt, bewirkt hier aufgrund der asymmetrischen, einseitigen Anlage an der Oberfläche der Rückwirkungsnut 10' ein Drehmoment entgegen dem Uhrzeigersinn.

Wie in der Figur 2 zu sehen ist, sind insgesamt 4 der Rückwirkungskörper 14' in der Mittelstellung des Drehschieberventils außermittig in der zugehörigen Rückwirkungsnut 10' angeordnet, während zwei Rückwirkungskörper 14 mittig in der zugeordneten Nut 10 einliegen. Bei einem anderen Ausführungsbeispiel kann auch vorgesehen sein, dass alle Rückwirkungskörper in der Mittelstellung außermittig in den jeweils zugeordneten Rückwirkungsnuten einliegen.

Der Satz von Rückwirkungskörpern 13, 13', der axial beabstandet neben den Rückwirkungskörpern 14, 14' in der Figur 1 dargestellt ist, ist grundsätzlich ähnlich aufgebaut wie die in Figur 2 und 3 beschriebenen Bauelemente. Es sind zwei in der Mittelstellung mittig in den korrespondierenden Nuten 10 einliegende Rückwirkungskörper 13 vorgesehen. Die (nicht dargestellten) außermittig angeordneten Rückwirkungskörper, die in den Nuten 10' einliegen, liegen jedoch an der jeweils anderen Flanke der Nut 10' an. Dadurch ergibt sich bei Beaufschlagung mit hydraulischem Druck in Radialrichtung ein Drehmoment im Uhrzeigersinn, welches vom Betrag her so groß ist wie das durch die Rückwirkungskörper 14' erzeugte Drehmoment.

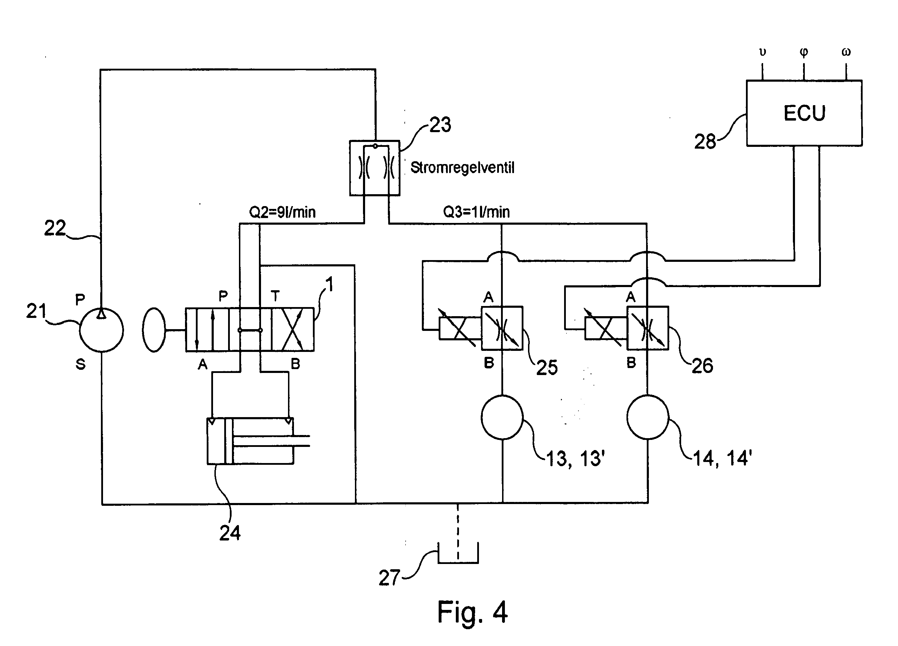

Die Figur 4 zeigt einen hydraulischen Schaltplan für eine Servolenkung mit einem Drehschieberventil nach den Figuren 1-3.

Eine Hydraulikpumpe von der Bauart einer Flügelzellenpumpe ist mit 21 bezeichnet. Sie versorgt über eine Druckleitung 22 und ein Stromregelventil 23 das Drehschieberventil 1 mit Hydraulikfluid. Bei der dargestellten Mittelstellung des Drehschieberventils 1 werden zwei hydraulische Arbeitsräume A und B eines Hydraulikmotors 24 jeweils mit dem gleichen Druck beaufschlagt, so dass keine Servounterstützung erzeugt wird. Wird das Drehschieberventil 1 aus der gezeigten Mittelstellung ausgelenkt, so wird entweder der Arbeitsraum A mit höherem Druck beaufschlagt, was zu einer Bewegung des Hydraulikkolbens nach rechts führt, oder es wird der Arbeitsraum B mit Überdruck beaufschlagt, so dass der Hydraulikkolben nach links verfahren wird. Dies ist die übliche Funktion einer hydraulischen Servolenkung mit Drehschieber mit offener Mitte.

Ein Teilstrom von beispielsweise 10% des gesamten Volumenstroms, der durch das Stromregelventil 23 abgezweigt wird, wird über elektrisch gesteuerte Proportionalventile 25 und 26 auf die hydraulischen Außenräume gegeben, die die Kugeln 13, 13' einerseits und 14, 14' andererseits umgeben. Von dort geht die Hydraulikflüssigkeit in einen Vorratsbehälter 27.

Elektrisch werden die Proportionalventile 25 und 26 von einer Steuerung 28 angesteuert, welche verschiedene Fahrzeugdaten auswertet, so beispielsweise die Geschwindigkeit, den Lenkwinkel und die Gierrate des Fahrzeugs.

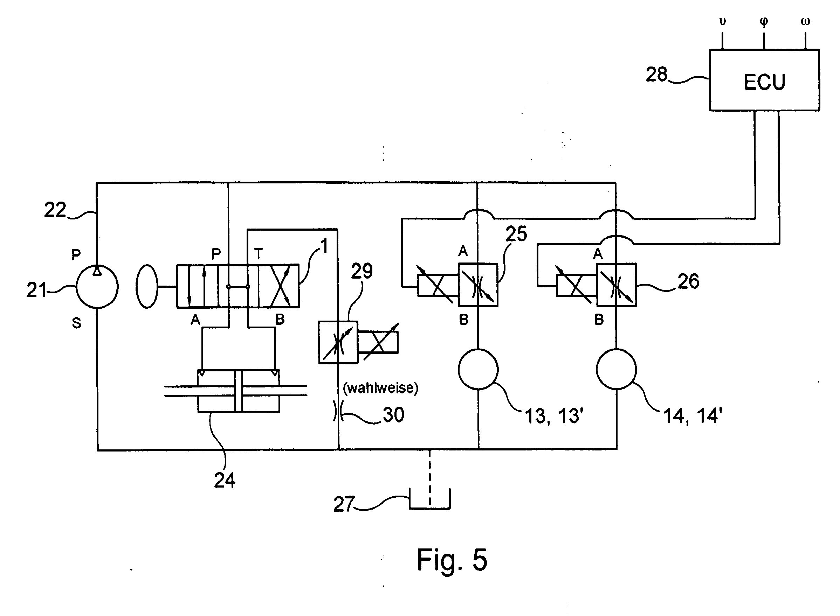

Die Figur 5 zeigt eine ähnliche hydraulische Schaltung wie Figur 4. Gleiche Bauelemente tragen gleiche Bezugsziffern. Allerdings ist bei dieser Variante das Stromregelventil 23 entfallen und wird durch ein weiteres elektrisch gesteuertes Proportionalventil 29 ersetzt. Dieses Proportionalventil 29 im Rücklauf bewirkt einen hydrodynamisch aufgebauten und der Höhe nach steuerbaren Druck auf der Druckseite des Drehschieberventils 1, der dann ebenfalls an den Proportionalventilen 25 und 26 ansteht und der insbesondere auch regelbar ist. Eine Drosselbohrung 30 kann für einen ungeregelten Druckaufbau sorgen.

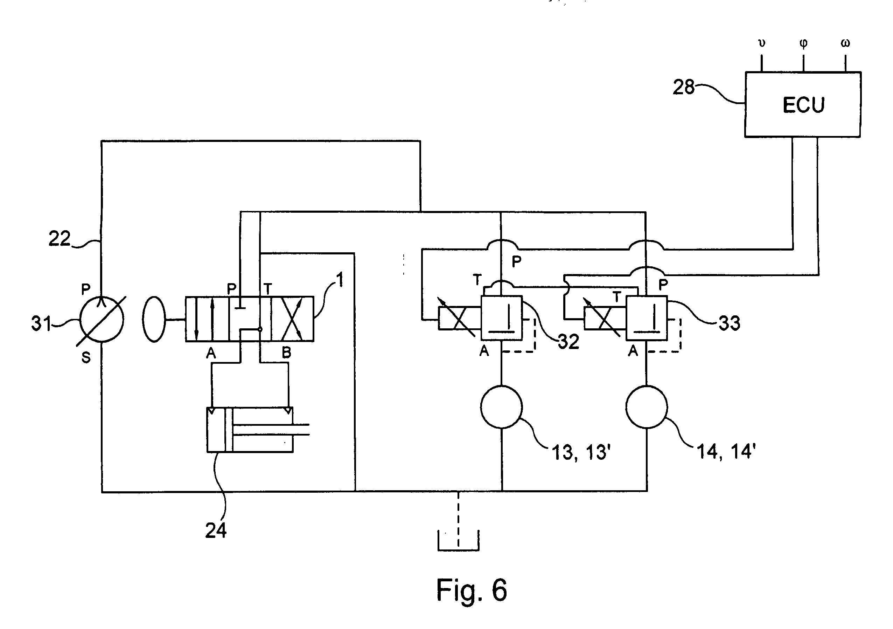

In der Figur 6 ist ein hydraulischer Schaltplan für ein Drehschieberventil mit geschlossener Mitte veranschaulicht. Hier ist eine druckgeregelte Hydraulikpumpe 31 vorgesehen, die einen konstanten Druck in der Leitung 22 erzeugt. Das Drehschieberventil 1 wird bei Öffnung in der einen oder in der anderen Richtung den Druck in einem der beiden Arbeitsräume A oder B anheben und entsprechend den Servomotor 24 betätigen. Die Kugelreihen 13, 13' beziehungsweise 14, 14' werden über Druckminderventile 32, 33 mit dem Hydraulikdruck beaufschlagt. Die Druckminderventile 32, 33 werden wiederum von einer Steuerung 28 in Abhängigkeit von den Signalen für die Geschwindigkeit, den Lenkwinkel und die Gierrate angesteuert.

In der Praxis arbeitet eine Servolenkung mit den insoweit beschriebenen Drehschieberventil wie folgt:

Zunächst wird im Betrieb über die jeweilige Hydraulikpumpe (21, 31) ein Volumenstrom oder ein Betriebsdruck mit einem Hydraulikfluid in der Leitung 22 bereit gestellt. Wird nun über ein Lenkrad ein Drehmoment in die Verzahnung des Drehschiebers 2 eingeleitet, so wird dieser gegen die Federkraft des Drehstabs 3 gegenüber dem Ritzel 4 verdreht. Das Drehschieberventil erzeugt dann einen Überdruck in einem der Arbeitsräume A oder B, so dass eine Lenkbewegung über dem Servomotor 24 eingeleitet wird.

Ein zusätzliches Drehmoment kann dann in das Drehschieberventil eingeleitet werden, indem die Rückwirkungskörper 13, 13' oder 14, 14' mit Druck beaufschlagt werden. Hierzu werden dann die elektrisch steuerbaren Ventile 25, 32 oder 26, 33 angesteuert.

Das zusätzlich erzeugte Drehmoment kann das aufzuwendende Handmoment am Lenkrad vergrößern oder verkleinern, je nachdem, welche Gruppe von Rückwirkungskörpern mit Druck beaufschlagt wird. Hier ist zwischen zwei Varianten zu unterscheiden:

A. Beide Gruppen von Rückwirkungskörpern 13, 13' und 14, 14' werden gleichzeitig mit Druck beaufschlagt.
In diesem Fall heben sich die von den außermittig angeordneten Rückwirkungskörpern 13' und 14' erzeugten Drehmomente gegenseitig auf. Die mittig angeordneten Rückwirkungskörpern 13 und 14 erzeugen dann eine hydraulische Rückwirkung. Diese wirkt für den Fahrer als verstärkte Mittenzentrierung.

B. Nur eine Gruppe von Rückwirkungskörpern 13, 13'oder 14, 14' wird mit Druck beaufschlagt.
Wird nur eine Gruppe mit Druck beaufschlagt, so wird durch die außermittig angeordneten Rückwirkungskörper 13' bzw. 14' ein Drehmoment auf den Drehschieber ausgeübt. Dadurch stellt sich eine Verdrehung zwischen der Steuerbüchse 9 und dem Drehschieber 2 ein. Es ergibt sich ein aktives Drehmoment, was zur Überlagerung der in der Lenkung vorhandenen Momente genutzt wird.
Ein solcher Eingriff in die Lenkung währen der Fahrt in Abhängigkeit von der Steuerung 28 kann beispielsweise für eine Seitenwindkompensation oder für ein elektronisches Stabilitätsprogramm genutzt werden.

Die Steuerventile können die beschriebenen Drehschieberventile sein, aber auch Flachschieberventile oder Sternventile. Weiter kann die Erfindung sowohl bei Zahnstangenlenkungen als auch bei Kugelumlauflenkungen angewendet werden.

Die Rückwirkungskörper können von anderer geometrischer Form sein, z.B. tonnenförmig oder zylinderförmig. Sie können auch in Axialrichtung mit Hydraulikdruck beaufschlagt und in entsprechende in Axialrichtung offene V-Nuten gedrängt werden.

Mittels der Figuren 7 und 8 wird nachfolgend erläutert, wie bei ausschließlicher Verwendung von Drucksensoren bzw. in Kombination mit zwei Winkelsensoren das Fahrerhandmoment ermittelbar ist.

Der obere Teil der Figur 7 zeigt eine vereinfachte Systemdarstellung der erfindungsgemäßen Servolenkung mit den bei der Ermittlung des Fahrerhandmoments zu berücksichtigenden Größen. Ohne Kenntnis über das aktuell anliegende Fahrerdrehmoment sind Zusatzfunktionen wie Lane-Keeping, Parkassistent, etc. nicht praktikabel. Für diese Funktionen ist es notwendig, dass das Lenksystem ein Eingreifen des Fahrers erkennen kann, damit es den aktuellen aktiven Lenkvorgang abbrechen kann und dem Fahrer wieder eine normale Lenkfunktion zu Verfügung stellt. Von den im oberen Teil der Figur 7 dargestellten Systemgrößen sind das Fahrer(hand)moment und das an den Rädern angreifende Moment bzw. die Kräfte an den Spurstangen nicht bekannt. Die Größen Lenkradwinkel, Ritzelwinkel Kugeldrücke, Unterstützungsdruck und die Stellgrößen der Druckminderventile sind dagegen kostengünstig zu messen. So wird der Lenkradwinkel (absolut, multi-turn) über den ESP-Sensor meist mit einer Auflösung von 0,5° zur Verfügung gestellt. Der Ritzelwinkel (absolut, single-turn) wird meist mit einer Auflösung von 0,1° gemessen. Über den Lenkradwinkel kann ermittelt werden, ob ein "multi-turn" vorliegt.

Aus den auf die Rückwirkungskörper wirkenden Drücken, welche als Kugel 13,13',14,14' ausgebildet sind, läßt sich direkt das auf die Lenksäule 2 ausgeübte Kugelmoment berechnen, da die Funktion

$$M_{Kugel} = f(p_{Kugelreihe\ A},\ p_{Kugelreihe\ B})$$

bekannt ist.

Das Unterstützungsmoment läßt sich optional betragsmäßig aus dem Unterstützungsdruck anhand der bekannten Funktion

$$|M_{Unterstützung}| = f(p_{Unterstützung})$$

ermitteln.

Die Verdrehung des Drehstabes 3 und somit das Drehstabmoment läßt sich betragsmäßig ebenfalls aus dem Unterstützungsdruck nach der Formel

$$|M_{Drehstab}| = c_{Drehstab} * |delta\ phi| = f(p_{Unterstützung})$$

ermitteln.

Das bedeutet, dass bzgl. des Lenkrades und der Lenksäule sämtliche notwendige Größen zur Bestimmung des Fahrerhandmomentes vorhanden sind. Sofern vom Fahrer kein Moment aufgebracht wird, gilt die Beziehung:

$$M_{Kugel} + M_{Drehstab} = J_{Lenkrad,Lenksäule} * \varphi_{Lenkrad}/dt^2$$

Da das Drehstabmoment nur betragsweise bekannt ist, muß eine der folgenden Beziehungen immer stimmen, solange der Fahrer eingreift:

$$M_{Kugel} - J_{Lenkrad,Lenksäule} * \varphi_{Lenkrad}/dt^2 = -|M_{Drehstab}|$$

bzw.

$$M_{Kugel} - J_{Lenkrad,Lenksäule} * \varphi_{Lenkrad}/dt^2 = +\left|M_{Drehstab}\right|$$

Stimmt keine der beiden obigen Beziehungen, so muß ein Fahrerhandmoment

$$M_{Fahrer} = J_{Lenkrad,Lenksäule} * \varphi_{Lenkrad}/dt^2 - M_{Kugel} - \left|M_{Drehstab}\right|$$

oder

$$M_{Fahrer} = J_{Lenkrad,Lenksäule} * \varphi_{Lenkrad}/dt^2 - M_{Kugel} + \left|M_{Drehstab}\right|$$

anliegen.

Welche der Beziehungen jeweils gültig ist, kann durch die folgenden Erkenntnisse bestimmt werden. So wirkt idR stets das Kugelmoment dem Fahrermoment entgegen. Lediglich das schnelle Zurücklenken aus der Kurve stellt neben dem Parkiervorgang eine Ausnahme von dieser Erkenntnis dar. Das schnelle Zurücklenken läßt sich durch Auswertung der Lenkwinkelgeschwindigkeit leicht ermitteln. Ob ein Parkiervorgang vorliegt, kann aus der Fahrzeuggeschwindigkeit und evtl. durch die Auswertung des Lenkwinkel bzw. der Lenkwinkelgeschwindigkeit ermittelt werden.

Die Realisierung der vorbeschriebenen Drehmomentenberechnung kann leicht mittels Hilfe eines Beobachters, welchem die zuvor aufgeführten Größen zugeführt werden, erfolgen.

Bei der zweiten erfindungsgemäßen Ausführungsform, bei der zwei Winkelsensoren zur Ermittlung der Verdrehung des Drehstabes eingesetzt werden, kann die Berechnung des Fahrerhandmoments wie nachfolgend beschrieben erfolgen.

Liegt sowohl der Lenkradwinkel, als auch der Ritzelwinkel vor, so können diese Signale zur Bestimmung des Fahrerhandmomentes herangezogen werden:

$$M_{Fahrer} = J_{Lenkrad,Lenksäule} * \varphi_{Lenkrad}/dt^2 - M_{Kugel} - (\varphi_{Lenkrad} - \varphi_{Ritzel}) * c_{Drehstab}$$

Falls die Auflösungen der Winkelsignale groß sind, wird das Fahrerhandmoment stark quantisiert sein. Die zusätzliche Auswertung des Unterstützungsdruckes kann dies deutlich verbessern:

$$M_{Fahrer} = J_{Lenkrad,Lenksäule} * \varphi_{Lenkrad}/dt^2 - M_{Kugel} - sign(\varphi_{Lenkrad} - \varphi_{Ritzel}) * c_{Drehstab}$$

Für große Momente, bei denen die Vorzeichenbestimmung aus den Winkelsignalen zuverlässig ist, liefert letztere Beziehung gute Ergebnisse.

Die Figur 8 zeigt ist im wesentlichen identisch mit der Figur 6. Sie zeigt lediglich die Anordnung der zusätzlichen Sensoren 40, 41, 42, 43 und 44 für die Berechnung des Fahrerhandmoments. Bei den Sensoren 40, 41 und 42 handelt es sich dabei um Drucksensoren. Der Sensor 44 ist als Lenkwinkelsensor und der Sensor 43 als Ritzelwinkelsensor ausgebildet.

**Patentansprüche**

1. Servolenkung für Kraftfahrzeuge, mit einem von einem Fahrer manuell zu betätigenden Ventil (1), welches eine hydraulisch beaufschlagbare Rückwirkungsanordnung mit Rückwirkungskörpern (13, 13'; 14, 14') und jeweils zugeordneten Rückwirkungsnuten (10, 10') aufweist, wobei wenigstens ein erster Rückwirkungskörper (13') und wenigstens ein zweiter Rückwirkungskörper (14') derart zu den ihnen zugeordneten Rückwirkungsnuten (10') ausgerichtet sind, dass eine Beaufschlagung mit Hydraulikdruck zumindest in der Mittellage und der Mittellage benachbarter Stellung des Ventils (1) bei dem ersten Rückwirkungskörper (13') ein Drehmoment in einem ersten Drehsinn und bei dem zweiten Rückwirkungskörper (14') ein Drehmoment in einem zweiten, dem ersten Drehsinn entgegen gerichteten Drehsinn erzeugt, **dadurch gekennzeichnet , dass** mindestens drei Sensoren (40,41,42) vorgesehen sind, wobei ein erster Sensor (40) den Hydraulikdruck im Servomotor (24) oder in dessen Zu- bzw. Ableitungen oder vor dem Drehschieberventil (1) ermittelt, und die beiden anderen Sensoren (41,42) die auf die Rückwirkungskörper (13,13'; 14,14') wirkenden Hydraulikdrücke oder die Hydraulikdrücke in den Zuleitungen zu den Rückwirkungskörpern ermitteln, und dass eine Steuereinheit (28) unter anderem aus den von den Sensoren ermittelten Daten das Fahrerhandmoment ermittelt.

2. Servolenkung für Kraftfahrzeuge, mit einem von einem Fahrer manuell zu betätigenden Ventil (1), welches eine hydraulisch beaufschlagbare Rückwirkungsanordnung mit Rückwirkungskörpern (13, 13'; 14, 14') und jeweils zugeordneten Rückwirkungsnuten (10, 10') aufweist, wobei wenigstens ein erster Rückwirkungskörper (13') und wenigstens ein zweiter Rückwirkungskörper (14') derart zu den ihnen zugeordneten Rückwirkungsnuten (10') ausgerichtet sind, dass eine Beaufschlagung mit Hydraulikdruck zumindest in der Mittellage und der Mittellage benachbarter Stellung des Ventils (1) bei dem ersten Rückwirkungskörper (13') ein Drehmoment in einem ersten Drehsinn und bei dem zweiten Rückwirkungskörper (14') ein Drehmoment in einem zweiten, dem ersten Drehsinn entgegen gerichteten Drehsinn erzeugt, **dadurch gekennzeichnet, dass** die Servolenkung zwei Winkelsensoren (43,44) eine Steuereinheit und zusätzliche Sensoren aufweist, wobei die Winkelsensoren (43,44) die Verdrehung eines Drehstabes (3) ermitteln, und die zusätzlichen Sensoren die von den Rückwirkungskörpern aufgebrachten Momente ermitteln, und die Steuereinheit unter anderem aus den von den Sensoren ermittelten Daten das Fahrerhandmoment ermittelt.

3. Servolenkung nach Anspruch 1, **dadurch gekennzeichnet, dass** die Steuereinheit (28) die Verdrehung des Drehstabes bzw. des Drehstabmoments anhand des ermittelten Unterstützungsdruckes des Servomotors insbesondere in Abhängigkeit von weiteren ermittelten Fahrzeug- und/oder Zustandsgrößen ermittelt.

4. Servolenkung nach einem der Ansprüche 1 bis 3, **dadurch gekennzeichnet , dass** die Sensoren insbesondere zwei Drucksensoren sind, welche insbesondere den auf die Rückwirkungskörper wirkenden Hydraulikdruck ermitteln.

5. Servolenkung nach einem der vorhergehenden Ansprüche, **dadurch gekennzeichnet, dass** die Drehmomente in dem ersten und dem zweiten Drehsinn in jeder Stellung des Ventils (1) erzeugbar sind.

6. Servolenkung nach einem der vorhergehenden Ansprüche, **dadurch gekennzeichnet , dass** zur Beaufschlagung der Rückwirkungskörper (13, 13'; 14, 14') elektrisch steuerbare Proportionalventile (25, 26) vorgesehen sind.

7. Servolenkung nach einem der vorhergehenden Ansprüche, **dadurch gekennzeichnet, dass** zur Beaufschlagung der Rückwirkungskörper (13, 13'; 14, 14') elektrisch steuerbare Druckregelventile oder Druckminderventile (32, 33) vorgesehen sind.

8. Servolenkung nach einem der vorhergehenden Ansprüche, **dadurch gekennzeichnet, dass** die Steuereinheit durch Bildung von Momentenbilanzen unter Berücksichtigung von Plausibilitäten das vom Fahrer aufgebrachten Drehmoments (Fahrerhandmoment) berechnet.

9. Servolenkung nach einem der vorhergehenden Ansprüche, **dadurch gekennzeichnet , dass** die Steuereinheit bei nicht bestromten Druckminderventilen (32,33) das Fahrerhandmoment unter Berücksichtigung des Unterstützungsdrucks durch Auswertung der Unterstützungsdruck-Verdrehwinkel-Kennlinie ermittelt.

10. Servolenkung nach einem der vorhergehenden Ansprüche, **dadurch gekennzeichnet , dass** die Steuereinheit bei Verwendung von drei Drucksensoren das Fahrerhandmoment $M_{Fahrer}$ nach der Formel

$$M_{Fahrer} = J_{Lenkrad, Lenksäule} * \varphi_{Lenkrad}/dt^2 - M_{Kugel} - |M_{Drehstab}|$$

berechnet, sofern nicht die Beziehung

$$M_{Kugel} - J_{Lenkrad,Lenksäule} * \varphi_{Lenkrad}/dt^2 = -\left|M_{Drehstab}\right|$$

gilt bzw. nach der Formel

$$M_{Fahrer} = J_{Lenkrad,Lenksäule} * \varphi_{Lenkrad}/dt^2 - M_{Kugel} + \left|M_{Drehstab}\right|$$

berechnet, sofern nicht die Beziehung

$$M_{Kugel} - J_{Lenkrad,Lenksäule} * \varphi_{Lenkrad}/dt^2 = +\left|M_{Drehstab}\right|$$

gilt.

**11.** Servolenkung nach einem der Ansprüche 2 bis 9, **dadurch gekennzeichnet , dass** die Steuereinheit bei Verwendung von zwei Winkelsensoren zur Ermittlung der Verdrehung des Drehstabes das Fahrerhandmoment $M_{Fahrer}$ für Fahrerhandmomente nach der Formel

$$M_{Fahrer} = J_{Lenkrad,Lenksäule} * \varphi_{Lenkrad}/dt^2 - M_{Kugel} - (\varphi_{Lenkrad}-\varphi_{Ritzel}) * c_{Drehstab}$$

oder der Formel

$$M_{Fahrer} = J_{Lenkrad,Lenksäule} * \varphi_{Lenkrad}/dt^2 - M_{Kugel} - sign(\varphi_{Lenkrad}-\varphi_{Ritzel}) * c_{Drehstab}$$

berechnet.

**Claims**

**1.** Power steering system for motor vehicles, with a valve (1) to be manually actuated by the driver, which has a reaction effect arrangement capable of being subjected to hydraulic pressure, with reaction bodies (13, 13'; 14, 14') and reaction slots (10, 10') allocated to each of these, wherein at least one first reaction body (13') and at least one second reaction body (14') are aligned to the reaction slots (10') allocated to them in such a way that an imposition of hydraulic pressure at least in the middle position of the valve (1) and the setting adjacent to the middle position causes at the first reaction body (13') a torque force in a first direction of rotation and at the second reaction body (14') a torque force in a second direction of rotation, opposite to the first direction of rotation, **characterised in that** at least three sensors (40, 41, 42) are provided, wherein a first sensor (40) detects the hydraulic pressure in the servomotor (24) or in its delivery or outgoing lines or upstream of the sliding-vane valve (1), and the two other sensors (41, 42) detect the hydraulic pressures taking effect on the reaction bodies (13, 13'; 14, 14') or the hydraulic pressures in the delivery lines to the reaction bodies, and **in that** a control unit (28) determines from the data detected by the sensors, inter alia, the torque imposed by the hand of the driver.

**2.** Power steering system for motor vehicles, with a valve (1) to be manually actuated by the driver, which has a reaction effect arrangement capable of being subjected to hydraulic pressure, with reaction bodies (13, 13'; 14, 14') and reaction slots (10, 10') allocated to each of these, wherein at least one first reaction body (13') and at least one second reaction body (14') are aligned to the reaction slots (10') allocated to them in such a way that an imposition of hydraulic pressure at least in the middle position of the valve (1) and the setting adjacent to the middle position causes at the first reaction body (13') a torque force in a first direction of rotation and at the second reaction body (14') a torque force in a second direction of rotation, opposite to the first direction of rotation, **characterised in that** the power steering system has two angle sensors (43, 44), a control unit and additional sensors, wherein the angle sensors (43, 44) detect the rotation of a rotating bar (3) and the additional sensors detect the torque forces applied by the reaction bodies and the control unit determines from the data detected by the sensors, inter alia, the torque imposed by the hand of the driver.

3. Power steering system according to Claim 1, **characterised in that** the control unit (28) detects the rotation of the rotating bar and of the rotating bar torque respectively, on the basis of the detected support pressure of the servomotor, in particular as a function of other detected vehicle and/or status values.

4. Power steering system according to any one of Claims 1 to 3, **characterised in that** the sensors are, in particular, two pressure sensors, which detect in particular the hydraulic pressure taking effect on the reaction bodies.

5. Power steering system according to any one of the preceding claims, **characterised in that** the torque forces can be produced in the first and second direction of rotation in any setting of the valve (1).

6. Power steering system according to any one of the preceding claims, **characterised in that** electrically controllable proportional valves (25, 26) are provided for the imposition of force on the reaction bodies (13, 13'; 14, 14').

7. Power steering system according to any one of the preceding claims, **characterised in that** electrically controllable pressure regulating valves or pressure reduction valves (32, 33) are provided for the imposition of force on the reaction bodies (13, 13'; 14, 14').

8. Power steering system according to any one of the preceding claims, **characterised in that**, by forming torque force balances, taking plausibilities into account, the control unit calculates the torque force being applied by the driver (driver's hand torque).

9. Power steering system according to any one of the preceding claims, **characterised in that**, when no flow is passing through the pressure reduction valves (32, 33), the control unit detects the driver's hand torque, taking account of the support pressure, by evaluation of the support pressure/angle of rotation characteristic.

10. Power steering system according to any one of the preceding claims, **characterised in that** the control unit, with the use of three pressure sensors, calculates the driver's hand torque $M_{Driver}$ in accordance with the formula:

$$M_{Driver} = J_{Steering\ wheel,Steering\ column} * \varphi_{Steering\ wheel}/dt^2 - M_{Sphere} - [M_{Rotating\ bar}]$$

provided that the relationship

$$M_{Sphere} - J_{Steering\ wheel,Steering\ column} * \varphi_{Steering\ wheel}/dt^2 = - [M_{Rotating\ bar}]$$

does not apply, or, respectively, in accordance with the formula:

$$M_{Driver} = J_{Steering\ wheel,Steering\ column} * \varphi_{Steering\ wheel}/dt^2 - M_{Sphere} + [M_{Rotating\ bar}]$$

provided that the relationship

$$M_{Sphere} - J_{Steering\ wheel,Steering\ column} * \varphi_{Steering\ wheel}/dt^2 = +[M_{Rotating\ bar}]$$

does not apply.

11. Power steering system according to any one of Claims 2 to 9, **characterised in that** the control unit, with the use of two angle sensors to determine the direction of rotation of the rotating bar, calculates the driver's hand torque $M_{Driver}$ for driver hand torque values in accordance with the formula:

$$M_{Driver} = J_{Steering\ wheel,Steering\ column} * \varphi_{Steering\ wheel}/dt^2 - M_{Sphere} - (\varphi_{Steering\ wheel} - \varphi_{Pinion}) * C_{Rotating\ bar}$$

or the formula

$$M_{Driver} = J_{Steering\ wheel,Steering\ column} * \varphi_{Steering\ wheel}/dt^2 - M_{Sphere} - sign(\varphi_{Steering\ wheel}-\varphi_{Pinion}) * C_{Rotating\ bar}$$

**Revendications**

1. Direction assistée pour des véhicules automobiles, comprenant une vanne (1) à actionner manuellement par un conducteur, laquelle vanne présente un dispositif de réaction pouvant être alimenté hydrauliquement, comprenant des corps de réaction (13, 13' ; 14, 14') et des rainures de réaction (10, 10') respectivement associées, où au moins un premier corps de réaction (13') et au moins un deuxième corps de réaction (14') sont orientés par rapport aux rainures de réaction (10') qui leur sont associées, de manière telle qu'une alimentation en pression hydraulique, au moins dans la position moyenne et dans la position moyenne d'un positionnement voisin de la soupape (1), dans le cas du premier corps de réaction (13'), produise un couple dans un premier sens de rotation et, dans le cas du deuxième corps de réaction (14'), produise un couple dans un deuxième sens de rotation inverse par rapport au premier sens de rotation, **caractérisée en ce qu'**il est prévu au moins trois capteurs (40, 41, 42), où un premier capteur (40) détermine la pression hydraulique dans le servomoteur (24) ou dans ses conduites d'alimentation ou d'évacuation, ou bien en amont de la vanne à tiroir rotatif (1), et les deux autres capteurs (41, 42) déterminent les pressions hydrauliques agissant sur les corps de réaction (13, 13' ; 14, 14'), ou bien les pressions hydrauliques dans les conduites d'alimentation menant aux corps de réaction, et **en ce qu'**une unité de commande (28) détermine, entre autres variables, le couple manuel du conducteur d'après les données déterminées par les capteurs.

2. Direction assistée pour des véhicules automobiles, comprenant une vanne (1) à actionner manuellement par un conducteur, laquelle vanne présente un dispositif de réaction pouvant être alimenté hydrauliquement, comprenant des corps de réaction (13, 13' ; 14, 14') et des rainures de réaction (10, 10') respectivement associées, où au moins un premier corps de réaction (13') et au moins un deuxième corps de réaction (14') sont orientés par rapport aux rainures de réaction (10') qui leur sont associées, de manière telle qu'une alimentation en pression hydraulique, au moins dans la position moyenne et dans la position moyenne d'un positionnement voisin de la soupape (1), dans le cas du premier corps de réaction (13'), produise un couple dans un premier sens de rotation et, dans le cas du deuxième corps de réaction (14'), produise un couple dans un deuxième sens de rotation inverse par rapport au premier sens de rotation, **caractérisée en ce que** la direction assistée présente deux capteurs angulaires (43, 44), une unité de commande et des capteurs supplémentaires, où les capteurs angulaires (43, 44) déterminent la torsion d'une barre de torsion (3), et les capteurs supplémentaires déterminent les couples appliqués par les corps de réaction, et l'unité de commande détermine, entre autres variables, le couple manuel du conducteur d'après les données déterminées par les capteurs.

**3.** Direction assistée selon la revendication 1, **caractérisée en ce que** l'unité de commande (28) détermine la torsion de la barre de torsion ou du couple de la barre de torsion, à l'aide de la pression d'assistance du servomoteur ayant été déterminée, en particulier en fonction d'autres variables du véhicule et/ou d'état ayant été déterminées.

**4.** Direction assistée selon l'une quelconque des revendications 1 à 3, **caractérisée en ce que** les capteurs sont notamment deux capteurs de pression qui, en particulier, déterminent la pression hydraulique agissant sur les corps de réaction.

**5.** Direction assistée selon l'une quelconque des revendications précédentes, **caractérisée en ce que** les couples peuvent être produits dans le premier et dans le deuxième sens de rotation, dans chaque position de la vanne (1).

**6.** Direction assistée selon l'une quelconque des revendications précédentes, **caractérisée en ce qu'**il est prévu, pour l'alimentation des corps de réaction (13, 13' ; 14, 14'), des valves proportionnelles (25, 26) pouvant être commandées électriquement.

**7.** Direction assistée selon l'une quelconque des revendications précédentes, **caractérisée en ce qu'**il est prévu, pour l'alimentation des corps de réaction (13, 13' ; 14, 14'), des soupapes de régulation de pression ou des soupapes de réduction de pression (32, 33) pouvant être commandées électriquement.

**8.** Direction assistée selon l'une quelconque des revendications précédentes, **caractérisée en ce que** l'unité de commande, par formation de bilans de couples, en tenant compte de vraisemblances, calcule le couple (couple manuel du conducteur) appliqué par le conducteur.

**9.** Direction assistée selon l'une quelconque des revendications précédentes, **caractérisée en ce que** l'unité de commande, lorsque des soupapes de réduction de pression (32, 33) ne sont pas alimentées en courant, détermine, par analyse de la courbe caractéristique de la pression d'assistance/de l'angle de torsion, le couple manuel du conducteur, en tenant compte de la pression d'assistance.

**10.** Direction assistée selon l'une quelconque des revendications précédentes, **caractérisée en ce que** l'unité de commande, en cas d'utilisation de trois capteurs de pression, calcule le couple manuel du conducteur $M_{conducteur}$ d'après la formule :

$$M_{conducteur} = J_{volant\ de\ direction,colonne\ de\ direction} * \varphi_{volant\ de\ direction}/dt^2 - M_{billes} - |M_{barre\ de\ torsion}|$$

dans la mesure où la relation

$$M_{billes} - J_{volant\ de\ direction,colonne\ de\ direction} * \varphi_{volant\ de\ direction}/dt^2 = -|M_{barre\ de\ torsion}|$$

ne s'applique pas, ou bien calcule d'après la formule :

$$M_{conducteur} = J_{volant\ de\ direction,colonne\ de\ direction} * \varphi_{volant\ de\ direction}/dt^2 - M_{billes} + |M_{barre\ de\ torsion}|$$

dans la mesure où la relation

$$M_{billes} - J_{volant\ de\ direction,colonne\ de\ direction} * \varphi_{volant\ de\ direction}/dt^2 = +|M_{barre\ de\ torsion}|$$

ne s'applique pas.

11. Direction assistée selon l'une quelconque des revendications 2 à 9, **caractérisée en ce que** l'unité de commande, en cas d'utilisation de deux capteurs angulaires, calcule, pour la détermination de la torsion de la barre de torsion, le couple manuel du conducteur $M_{conducteur}$ pour des couples manuels de conducteur d'après la formule :

$$M_{conducteur} = J_{volant\ de\ direction,colonne\ de\ direction} * \varphi_{volant\ de\ direction}/dt^2 - M_{billes} - (\varphi_{volant\ de\ direction} - \varphi_{pignon}) * C_{barre\ de\ torsion}$$

ou bien calcule d'après la formule :

$$M_{conducteur} = J_{volant\ de\ direction,colonne\ de\ direction} * \varphi_{volant\ de\ direction}/dt^2 - M_{billes} - signe(\varphi_{volant\ de\ direction} - \varphi_{pignon}) * C_{barre\ de\ torsion}$$

Fig. 1

Fig. 2

Fig. 3

Fig. 4

EP 1 652 749 B1

Fig. 5

Fig. 6

Fahrermoment  Kugelmoment  3  Unterstützungs-  Momente/Kräfte
                                  moment          von den Rädern

J
Lenkrad, Lenksäule          J Lenkgetriebe,
                            Gestänge, Räder

Lenkradwinkel              Ritzelwinkel

Unterstützungsdruck        Parkierkennlinie

"Kugelmoment"

Fahrermoment

Fig. 7

EP 1 652 749 B1

Fig. 8

EP 1 652 749 B1

**EP 1 652 749 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19616439 C1
- DE 10254688 B3